(19) Europäisches Patentamt

European Patent Office

Office européen des brevets

(11) **EP 0 725 380 A1**

(12) **EUROPEAN PATENT APPLICATION**

(43) Date of publication:
07.08.1996 Bulletin 1996/32

(51) Int. Cl.⁶: **G09G 3/36**

(21) Application number: 96101274.7

(22) Date of filing: 30.01.1996

(84) Designated Contracting States:
**DE ES FR GB IT NL SE**

(30) Priority: **31.01.1995 JP 13784/95**

(71) Applicant: **CANON KABUSHIKI KAISHA**
**Tokyo (JP)**

(72) Inventors:
- **Matsuzaki, Eiichi,**
  **c/o Canon K.K.**
  **Tokyo 146 (JP)**
- **Hasegawa, Taketo,**
  **c/o Canon K.K.**
  **Tokyo 146 (JP)**
- **Nobutani, Toshiyuki,**
  **c/o Canon K.K.**
  **Tokyo 146 (JP)**
- **Tanahashi, Junichi,**
  **c/o Canon K.K.**
  **Tokyo (JP)**
- **Ono, Kenichiro,**
  **c/o Canon K.K.**
  **Tokyo (JP)**

- **Morimoto, Hajime,**
  **c/o Canon K.K.**
  **Tokyo (JP)**
- **Mori, Hiroshi,**
  **c/o Canon K.K.**
  **Tokyo (JP)**
- **Nakajima, Tatsuya,**
  **c/o Canon K.K.**
  **Tokyo (JP)**
- **Sanbe, Hideo,**
  **c/o Canon K.K.**
  **Tokyo (JP)**
- **Yamaguchi, Yoshinori,**
  **c/o Canon K.K.**
  **Tokyo (JP)**

(74) Representative: **Tiedtke, Harro, Dipl.-Ing. et al**
**Patentanwaltsbüro**
**Tiedtke-Bühling-Kinne & Partner**
**Bavariaring 4**
**80336 München (DE)**

(54) **Display control method for display apparatus having maintainability of display-status function and display control system**

(57)     A display control method for a display apparatus having display-status maintainability which enables partial-rewrite control function in a video capture system, and a display system having the display device. An area where image information from a CPU is updated, and an area where video information from a video-signal input device is combined with the image information from the CPU, are detected, then, video information and image information of the area to be updated is outputted in higher priority than image information of other areas. The output of the image information of the detected area is realized by scanning the image information of the area where the video information from the video-signal input device is displayed, the image information of the area where the image information from the CPU is updated, and the image information of other areas, respectively in intervals different from each other.

F I G. 1A

## Description

BACKGROUND OF THE INVENTION

This invention relates to a display control method for a display apparatus having maintainability of display status and display control system. For example, the present invention is applicable to a display apparatus comprising a display device which uses ferroelectric liquid crystal (FLC) as an operation medium for updating display status and which can maintain display status, by an application of an electric field.

Generally, an information processing system has a display device as information display means realizing visual representation function. For example, a CRT display is known as such display device, however, the CRT has a certain thickness, i.e., the volume of the overall display apparatus is large, which prevents downsizing of the apparatus. Further, this limits freedom of use of the information processing system using the display apparatus using a CRT, e.g., freedom regarding installation position or portability.

To compensate the above drawback, the system can employ a liquid crystal display (LCD) which results in downsizing of the overall display apparatus. An LCD includes a display using the above-mentioned FLC (hereinafter abbreviated to "FLCD"). One of the features of the FLCD is that its liquid crystal cells have maintainability of display status responsive to application of an electric field. The FLCD has thin liquid crystal cells, and long and narrow FLC particles are oriented in a first stable status or a second stable status in response to a direction of electric field application, thus maintain the orientation even if the applied electric field is removed. By virtue of this bidirectional stability of the FLC particles, the FLCD has display-status maintainability. Detailed descriptions of FLC's and FLCD's are given in, e.g., U.S. Patent No. 4,964,699 (Japanese Patent Application Laid-Open No. 63-243922).

Accordingly, different from a CRT or other LCD's, when using an FLCD, continuous refresh-drive of display screen can be made at longer intervals, and in addition to the continuous refresh-drive, a partial-rewrite drive that updates only display status corresponding to a part of displayed image to be changed is possible.

In the FLCD, the partial-rewrite drive is performed by outputting a line address corresponding to the number of the line of display screen and the pixel position of the line, in accordance with an output requirement signal from the display apparatus, which improves virtual display speed.

Further, recent rapid improvement of processing speed of a host central processing unit (CPU) has increased application software to display moving images on personal computers. A known example is a video-capture system that synthesizes a video signal from a video camera, video disk player or the like with image information of a personal computer and outputs the synthesized information onto a display apparatus.

However, since the conventional video capture system receives video signals generated by sequentially scanning (so-called non-interlaced scanning) or skipped scanning (so-called interlaced scanning) from the video camera, video disk player or the like, in a case where the video images from the video camera or the like is displayed using an FLCD as a display apparatus, the video capture system must update display images by the sequential scanning or skipped scanning. In this case, the feature of the FLCD, i.e., partial-rewrite control function is not utilized.

SUMMARY OF THE INVENTION

The present invention has been made in consideration of the above situation and has its object to provide a display control method for a display apparatus having display-status maintainability, which enables partial-rewrite control in synthesizing video information from a video camera, video disk player or the like with image information from a main CPU.

More specifically, the object of the present invention is, upon synthesizing video information from a video-signal input device with image information from a main CPU, at a process of sequential-rewrite of the entire image, to detect display area where display status has changed, based on the image information from the video-signal input device, and detect a display area where display status has changed, based on the image information from the main CPU, so as to determine priority order of display-update, and to perform image display in accordance with the priority order, thus attain high-quality display images under a partial-rewrite control which is characteristic of a display apparatus having display-status maintainability.

Further, regarding an FLCD, the present invention has another object to simplify the circuitry, by detecting temperature and controlling display-update in accordance with the detected temperature, and by filling a memory with specific data when the power of the apparatus is turned on or a display mode is changed, to generate pixel data of border area(s) easily, thus omitting circuitry for generating pixel data of border area(s) and a synthesizer for synthesizing the pixel data of border area(s) with display data.

According to the present invention, the foregoing objects are attained by providing a display control method for performing display on a surface of a display device, based on video information from a video-signal input device and image information from a central processing unit (CPU), comprising the steps of:

    detecting an area of the surface where the image information from the CPU is updated;

detecting an area of the surface where the video information from the video-input unit is displayed; and

outputting the video information and image information of the area to be updated to the display device, in higher priority than image information of other areas, based on information detected at the detection steps.

In accordance with the present invention as described above, at the outputting step, output of the video information and the image information in higher priority than image information of other areas is realized by scanning the area where the video information from the video-signal input device is updated, the area where the image information from the CPU is updated, and the other areas, respectively in interlacing intervals different from each other.

Further, information on peripheral temperature of the display device is further used as a factor of determining the interlacing interval.

Further, the display device is a ferroelectric liquid crystal display device having display-status maintainability.

Further, according to the present invention, the foregoing objects are attained by providing a display control apparatus for performing display on a surface of a display device, based on video information from a video-signal input device and image information from a central processing unit (CPU) comprising:

first detection means for detecting an area where the image information from the CPU is updated;

second detection means for detecting an area where the video information from the video-signal input device is displayed; and

display control means for outputting the video information and image information of the area to be updated to the display device, in higher priority than image information of other areas, based on the areas detected by the first and second detection means.

In accordance with the present invention as described above, the display control means includes scanning control means for scanning the area where the video information from the video-signal input device is updated, the area where the image information from the CPU is updated, and the other areas, respectively in interlacing intervals different from each other.

Further, the display control means further uses information on peripheral temperature of the display device as a factor of determining the interlacing interval.

Further, according to the present invention, the foregoing objects are attained by providing a display control apparatus for performing display on a surface of a display device, based on video information from a video-signal input device and image information from a central processing unit (CPU) comprising:

first memory means for temporarily storing the image information from the CPU;

combining means for generating display information by combining the video information from the video-signal input device with the image information outputted from the first memory means;

second memory means for temporarily storing the display information generated by the combining means;

first detection means for detecting an area in the first memory means, where stored content is updated;

second detection means for detecting a combining position where the video information from the video-signal input device is combined with the image information outputted from the first memory means;

display control means for outputting the video information and image information of the area to be updated out of the second memory means, in higher priority than image information of other areas, based on information detected by the first and second detection means.

Further, according to the present invention, the foregoing objects are attained by providing a display control apparatus for performing display on a surface of a display device, based on video information from a video-signal input device and image information from a central processing unit (CPU) comprising:

first memory means for temporarily storing the image information from the CPU;

combining means for generating display information by combining the video information from the video-signal input device with the image information outputted from the first memory means;

second memory means for temporarily storing the display information generated by the synthesizing means;

first detection means for detecting an area in the first memory means, where stored content is updated;

second detection means for detecting a combining position where the video information from the video-signal input device is combined with the image information outputted from the first memory means;

display control means for outputting the video information and image information of the area to be updated out of the second memory means, in higher priority than image information of other areas, based on information detected by the first and second detection means; and

writing means for writing predetermined information in remainder of the second memory means other than an area used for temporarily storing the display information generated by the combining means.

In accordance with the present invention as described above, the display control means includes scanning control means for scanning the area where the video information from the video-signal input device is updated, the area where the image information from the CPU is updated, and the other areas, respectively in interlacing intervals different from each other.

Further, the display control means further uses information on peripheral temperature of the display device as a factor of determining the interlacing interval.

Further, the display device is a ferroelectric liquid crystal display device having display-status maintainability.

Further, a display system having a display control apparatus and a ferroelectric liquid crystal display device.

According to the present invention, video information from the video-signal input device and image information from the main CPU are synthesized and temporarily stored at the storage means. Then, a display area, where moving-image display is performed based on the video information from the video-signal input device, and a display area, where display status has changed, other than the moving-image display area, are detected by the means for detecting a display area where display-update is performed based on the video information from the video-signal input device and the means for detecting a display area where display-update is performed based on the image information from the main CPU. In this construction, data of displayed area of the moving image is read out of the storage means and outputted in the first priority order, in accordance with an output requirement signal from the FLCD, and then data of a display area where display-update is performed is read out of the storage means and outputted in the second priority order, thus high-quality display under the partial-rewrite control, characteristic of FLCD, can be obtained.

Other objects and advantages besides those discussed above shall be apparent to those skilled in the art from the description of a preferred embodiment of the invention which follows. In the description, reference is made to accompanying drawings, which form a part thereof, and which illustrate an example of the invention. Such example, however, is not exhaustive of the various embodiments of the invention, and therefore reference is made to the claims which follow the description for determining the scope of the invention.

BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1A is a block diagram showing the configuration of information processing apparatus having a display control apparatus according to a first embodiment;

Fig. 1B is a flowchart showing an essential part of procedure by a main CPU 1 for display on an FLCD of the information processing apparatus of the first embodiment;

Fig. 1C is a flowchart showing an another example of a display on the FLCD by the main CPU 1;

Fig. 2A is a block diagram showing the construction of an FLCD interface of the first embodiment;

Fig. 2B is a flowchart showing a procedure of operation of a CPU 193 of the FLCD interface of the first embodiment;

Fig. 3 is a block diagram showing the construction of a SVGA controller;

Fig. 4 is an explanatory view of conversion from a VRAM address to a line address according to the first embodiment;

Fig. 5 is an explanatory view showing the relation between rewrite object pixels and rewrite line-flag registers of the first embodiment;

Fig. 6 is a block diagram showing the construction of a video interface according to the first embodiment;

Fig. 7 is an example of data format of video-data area information outputted from the video interface;

Fig. 8 is an example of display information outputted to the FLCD;

Fig. 9 is a block diagram showing the construction of a display-data switching device according to the first embodiment;

Fig. 10 is a timing chart showing switching timing of display data by the display-data switching device;

Fig. 11 is an explanatory view of display image screen of the FLCD;

Figs. 12A and 12B are examples of data format of display data according to the first embodiment;

Fig. 13 is a timing chart showing transfer of line addresses and pixel data to the FLCD;

Fig. 14 is a block diagram showing the construction of the FLCD interface according to a second embodiment;

Fig. 15 is a block diagram showing the construction of the FLCD interface according to a third embodiment; and

Fig. 16 is a flowchart showing processing by a memory controller according to the third embodiment.

DETAILED DESCRIPTION OF THE PREFERRED EMBODIMENTS

Preferred embodiments of the present invention will now be described in detail in accordance with the accompanying drawings.

[First Embodiment]

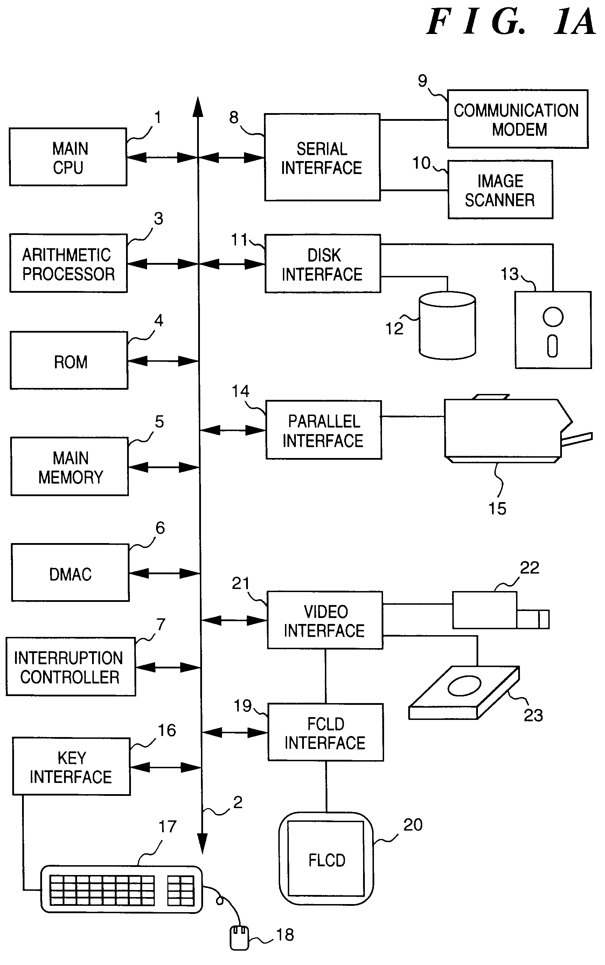

Fig. 1A is a block diagram showing the configuration of an information processing system using an FLCD, comprising a display control apparatus according a first embodiment of the present invention, as a display device of a video capture system.

In Fig. 1A, reference numeral 1 denotes a main CPU which controls the overall information processing system; 2, a system bus comprising an address bus, a control bus and a data bus; 3, an arithmetic processor which is dedicated to perform arithmetic operation; 4, a ROM which contains program for initialization of the entire system and the like; 5, a main memory which contains programs and which is used as a work area; 6, a direct memory access controller (DMAC) which performs data transfer between the memory and I/O devices without involving the CPU; and 7, an interruption controller which performs interruption control between the CPU and the I/O devices when an interruption requirement is issued from the I/O devices.

Numeral 9 denotes a communication modem which performs communication utilizing a public line or a dedicated line; 10, an image scanner which reads images and the like; 8, a serial interface which performs signal connection between the communication modem 9 or the image scanner and the bus; 12, a hard disk (HD); 13, a floppy disk (FD); 11, a disk interface which performs signal connection between the HD 12 or FD 13 and the bus; 15, a printer, e.g., an impact printer or non-impact printer such as a laser-beam printer and an ink-jet printer; 14, a parallel interface which performs signal connection between the printer 15 and the bus; 17, a keyboard for inputting characters, numerals and the like; 18 a mouse as a pointing device; and 16, a key interface for the keyboard 17 and the mouse 18.

Numeral 20 denotes an FLCD comprising, e.g., a display disclosed in U. S. Patent No. 4,922,241 (Japanese Patent Application Laid-Open No. 63-243993) by the present applicant; 19, an FLCD interface for the FLCD 20; 22, a video camera for recording video images; 23, a video disk player for reproduction of images from a video disk; and 21, a video interface for performing signal processing so that video signals from the video camera 22 and the video disk player 23 are inputted into the present system.

In the information processing system connected to the above-described various devices, a user normally performs operation in accordance with various information displayed on a display screen of the FLCD 20. That is, characters, image information and the like supplied from the serial interface 8, the HD 12, FD 13, keyboard 17, and the mouse 18, operation information regarding the user's system operation and the like, stored in the ROM 4 and the main memory 5, are displayed on the display screen of the FLCD 20, and the user edits information or inputs instruction to the system. The various devices respectively comprises a means for supplying display information to the FLCD.

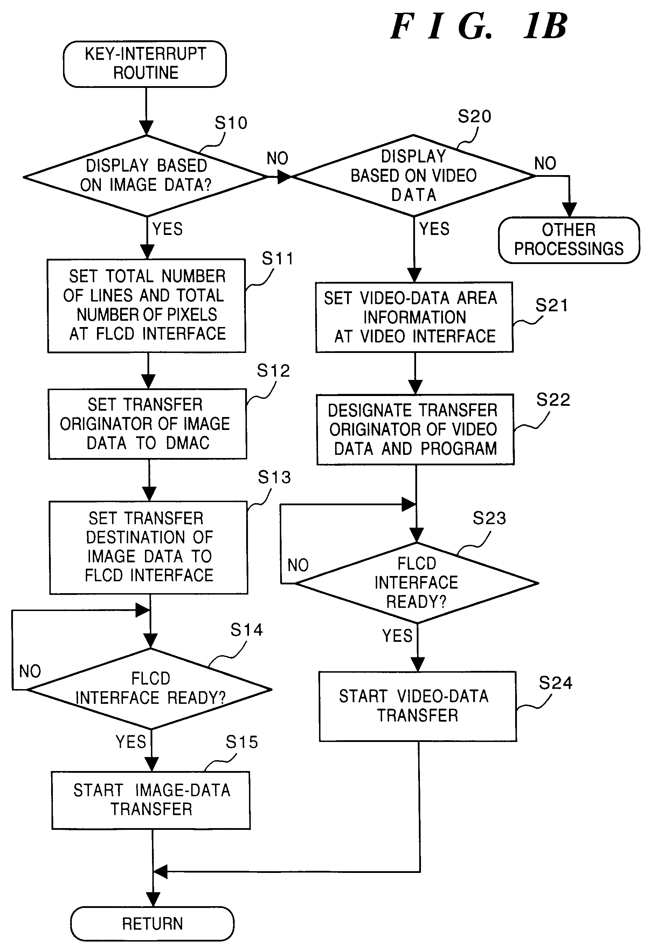

Fig. 1B is a flowchart showing an essential part of a procedure processed by the main CPU 1 for display on the FLCD 20. In this example, the display processing is made in response to key-interrupt initiated by key-input from the keyboard 17 or the mouse 18 via the key interface 16.

At step S10, whether or not the input instruction is for display based on image data, and at step S20, whether or not it is for display based on video data, is determined. If the instruction is for display based on image data, the process proceeds to step S11, where the total number of lines and the total number of pixels are set at the FLCD interface (controller) 19. Next, at step S12, the transfer originator of the image data is set to the DMAC 6. Note that the transfer originator may be the main memory 5, and further, an image data memory provided at the disk interface 11, the serial interface 8 and the like. At step S13, the transfer destination of the image data is set to the FLCD interface 19. At step S14, whether or not the FLCD interface 19 is in ready status is checked. If YES, image-data transfer by the DMAC 6 starts at step S15.

If the instruction is for display based on video data, the process proceeds to step S21 at which video-data area information designating display area on the FLCD display screen and the display size of video to be displayed within the area is set. At step S22, one of the video camera 22 or the video disk player 23 is designated as the source of the input video data, and a program of video to be displayed is selected. At step S23, whether or not the FLCD interface 19 is ready is checked, and if YES, video-data transfer starts at step S24.

Note that regarding other instructions than image-data/video-data display, corresponding other processings, e.g., output of FLCD display image to the printer 15 via the parallel interface 14, are performed.

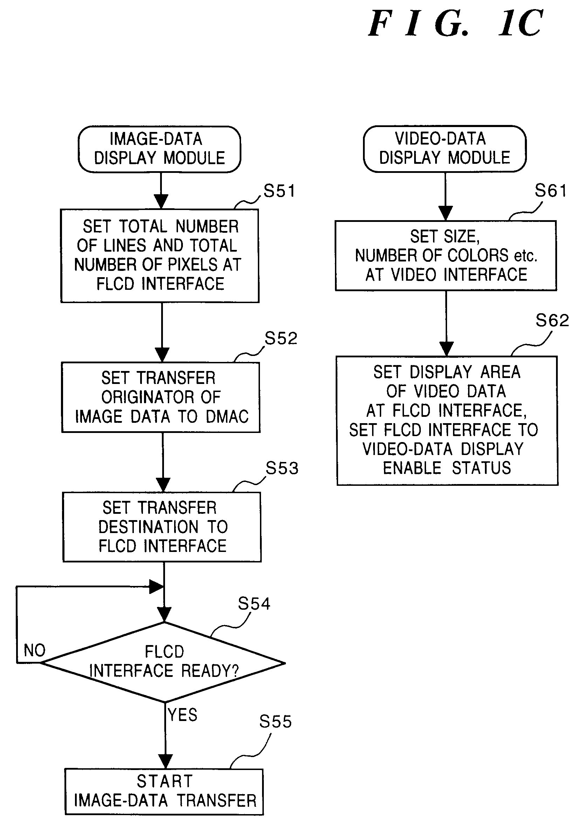

As described above, Fig. 1B shows an example of a common key-interrupt routine for image-data display and video-data display, however, the processing may be divided into image-data display module and video-data display module, as shown in Fig. 1C.

In this case, the operation procedure of the image-data display module at steps S51 to S55 is similar to that at steps S11 to S15. In the operation procedure of the video-data display module, as the video data is outputted from the video camera or the like in one-way manner, conditions such as the number of colors and size are set at the video interface at step S61, and at step S62, display area of video data is set at the FLCD interface, and the FLCD interface is set to display-enable status for displaying video data. Thereafter, video-data display is automatically continued at the set display area until display termination is instructed.

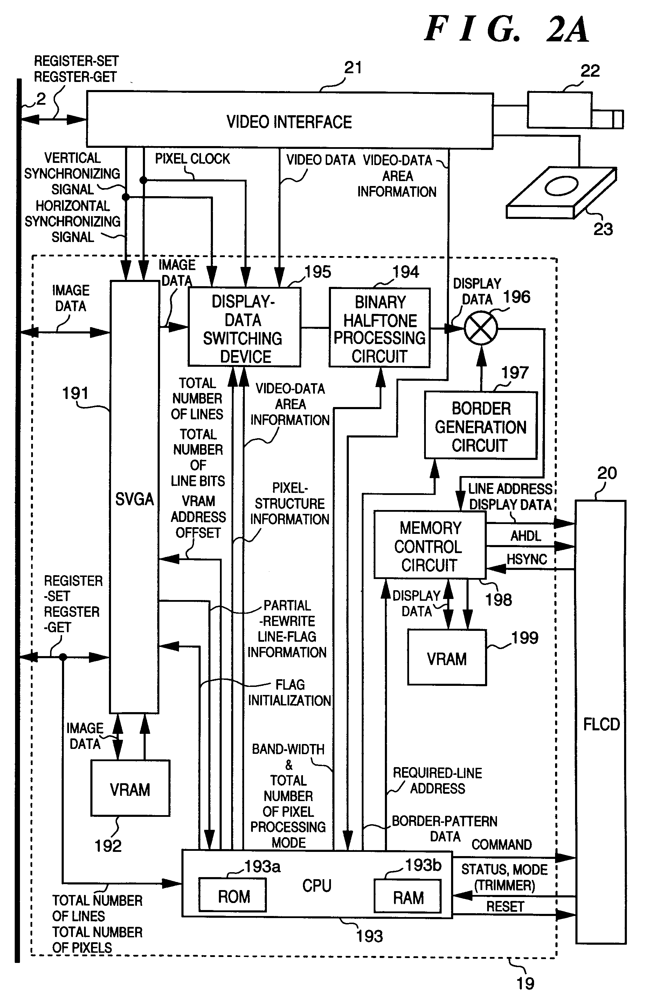

Fig. 2A is a block diagram showing the construction of the video interface 21 and the FLCD interface 19 of the display control apparatus. The operation of the FLCD interface 19 is controlled by the main CPU 1 and a CPU 193 (including a ROM 193a holding data and programs and a RAM 193b as an auxiliary storage).

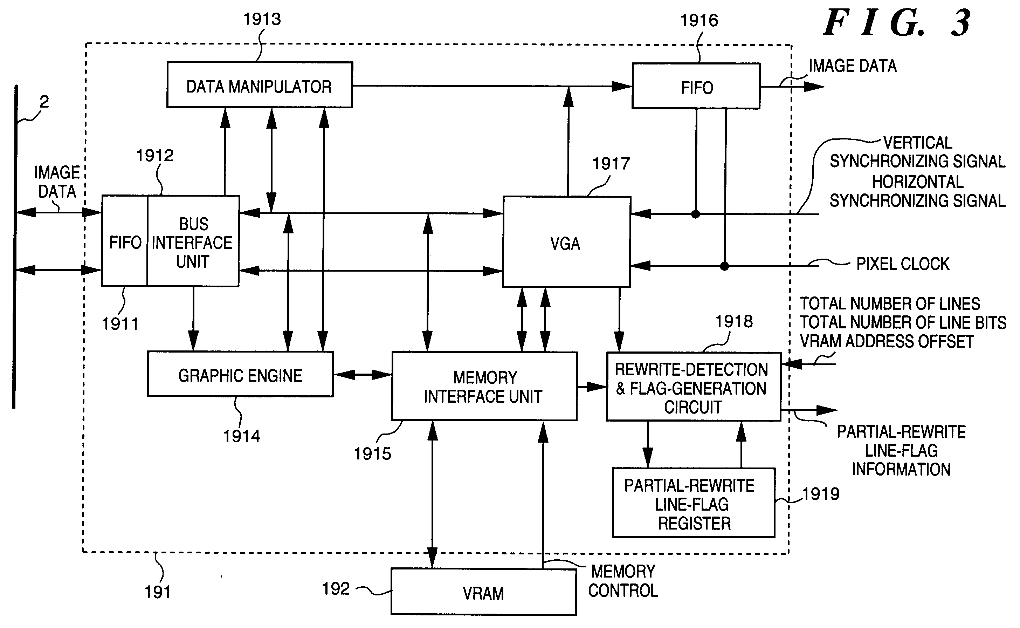

In Fig. 2A, the FLCD interface 19 has a well-known SVGA (super video graphics array) controller 191. The construction of the SVGA controller 191 will be described with reference to Fig. 3.

In Fig. 3, rewrite-display data, to which the main CPU 1 accesses within a window area of a display memory of the FLCD interface 19, is transferred via the system bus 2, and temporarily stored into a FIFO 1911. Also, a bank address data for projecting the window area of the display memory to an arbitrary area of a VRAM 192 is transferred via the system bus 2. The image data is in format of 24-bit data representing each 256 level of R, G, B colors. Control information data such as commands from the CPU 1 or the bank address data is transferred in the form of register-set data. To inform the CPU 1 of the status of the SVGA controller 191, register-get data is transferred to the CPU 1. The register-set data and the display data stored in the FIFO 1911 are sequentially outputted, and setting of the registers respectively included in a bus interface unit 1912 and a VGA controller 1917 are made in accordance with these data. The VGA controller 1917 is informed of the bank address with its image data and control command from the status of these registers.

The VGA controller 1917 generates a VRAM address for the VRAM 192, based on the address in the display-memory wind area and the bank address, and transfers strobe signals RAS and CAS as memory-control signals, a chip-select signal CS and a write-enable signal WE with the generated VRAM address to the VRAM 192 via a memory interface unit 1915, thus writes the image data into the VRAM address. At this time, the rewrite-display data is also transferred to the VRAM 192 via the memory interface unit 1915.

On the other hand, the VGA controller 1917 reads the image data from the VRAM 192 in accordance with a vertical synchronizing signal and a horizontal synchronizing signal inputted from the video interface 21, described later, and stores the image data into a FIFO 1916. The image data are sequentially outputted, from the oldest data, to a display-data switching device 195.

The SVGA controller 191 has a data manipulator 1913 and a graphic engine 1914 providing accelerator function. For example, if the main CPU 1 sets data for a circle, its central point, and its radius at the register of the bus interface unit 1912 and instructs to draw a circle, the graphic engine 1914 generates display data of the circle, and the data manipulator 1913 writes the data into the VRAM 192.

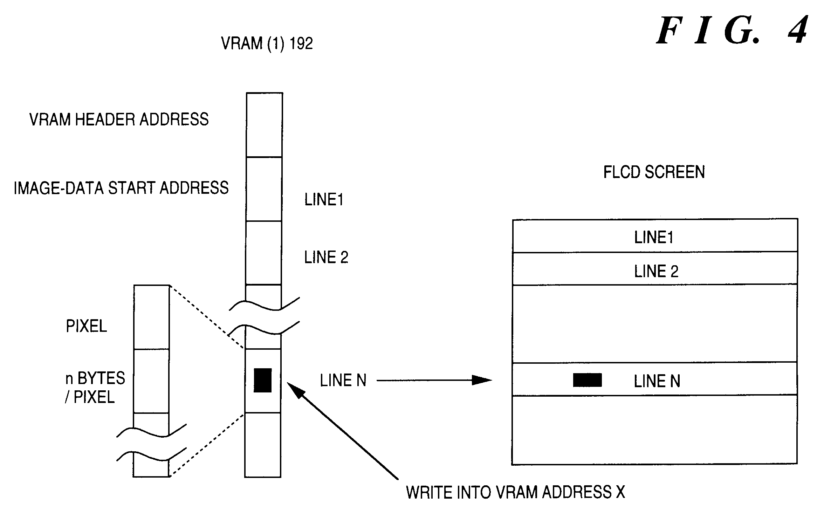

A rewrite-detection&flag-generation circuit 1918 monitors VRAM addresses generated by the VGA controller 1917. It reads a VRAM address at a point where the image data in the VRAM 192 is rewritten (written), i.e., when the write-enable signal and the chip-select signal CS are effective. Then, line address is calculated based on the VRAM address, data on a VRAM address offset, the total number of lines, the total number of line bits, respectively obtained from the information from the main CPU 1. Fig. 4 shows the conception of the calculation.

In Fig. 4, a pixel represented with an address X on the VRAM 192 corresponds to a line N of the FLCD pixels, where one line comprises a plurality of pixels, further, one pixel comprises a plurality of (n) bytes. In this case, the line address (line number N) is represented by:

$$\text{Line number } N = [\frac{(\text{VRAM address} X - \text{pixel data start address})}{\text{number of pixels per line} \times \text{number of bytes per pixel}}] + 1$$

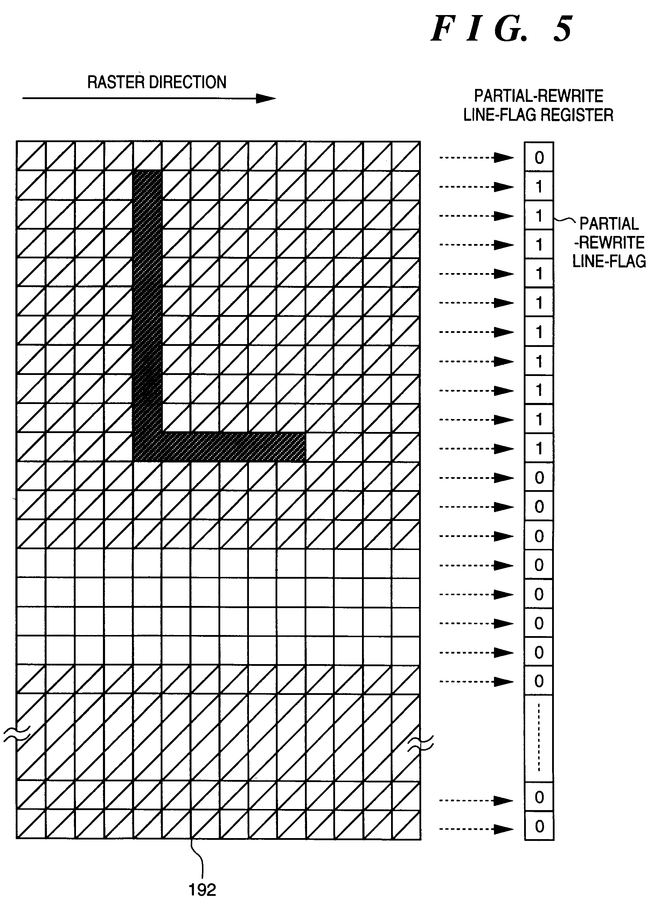

The rewrite-detection&flag-generation circuit 1918 sets a flag of a partial-rewrite line-flag register 1919 in accordance with the calculated line address. Fig. 5 shows this operation.

In Fig. 5, to display a letter "L", corresponding address display on the VRAM 192 is rewritten. In this case, the rewritten line address is detected by the above calculation, and flags of register corresponding to the line address is set to "1".

Returning to Fig. 2A, the CPU 193 reads the contents of the partial-rewrite line-flag register of the rewrite-detection&flag-generation circuit 1918 to detect the rewritten line addresses of the VRAM 192.

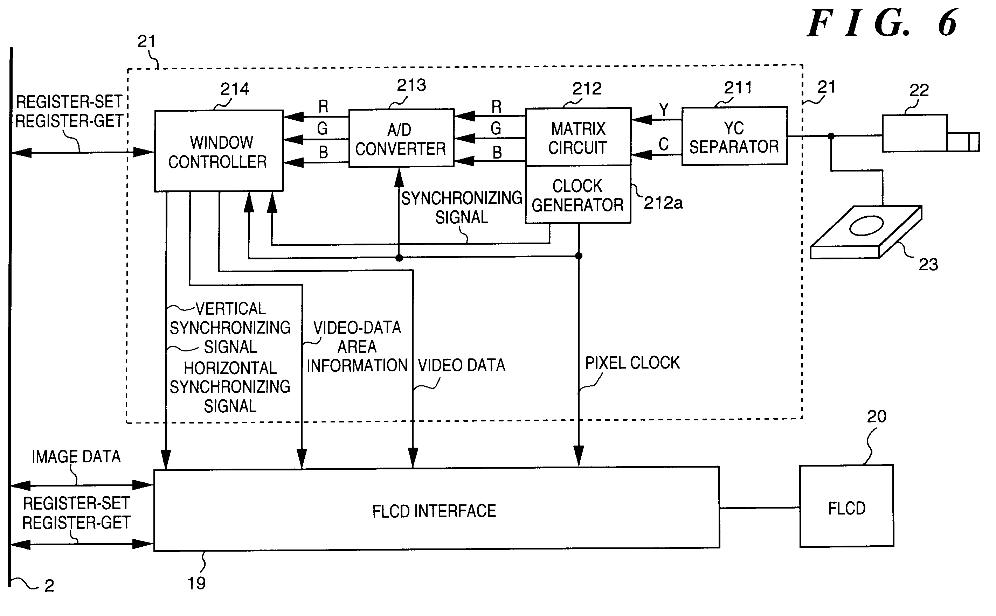

Next, the construction of the video interface 21 of the present embodiment will be described with reference to Fig. 6.

In Fig. 6, first, a YC separator 211a separates a composite video signal including a luminance signal (Y), a color signal (C) and a synchronizing signal, inputted from the video camera 22 or the video disk player 23, into the luminance signal (Y) including the synchronizing signal and the color signal (C). Next, a matrix circuit 212 separates the luminance signal (Y) and the color signal (C) into three primary color signals R (red), G (green) and B (blue) and the synchronizing signal. Further, an A/D converter 213 analog/digital converts the three primary color signals R, G and B, and inputs the converted signals into a window controller 214. The synchronizing signal separated by the matrix circuit 212 is also inputted into the window controller 24, and utilized for generating address information. The matrix circuit 212 has a clock generator 212a which generates a pixel clock and inputs the pixel clock into the A/D converter 213, where the pixel clock is utilized as a sampling clock for sampling the three primary color signals R, G and B. Further, the pixel clock is inputted into the window controller 214 and the SVGA controller 191 of the FLCD interface 19 for synchronization of various operations.

The window controller 214 performs enlargement/reduction of digitized R, G and B signals by means of bit-interval thinning/bit-interval interpolation, in accordance with size information in X-axis direction and in Y-axis direction for display based on video data, inputted from the video camera 22 or the video disk player 23, transferred in the form of register set data from the main CPU 1. Also, the window controller 214 performs address-information generation processing to paste the video image to a position determined by register information. Further, the window controller 214 has video-data area information indicative of a display position within image-display area, obtained from the size information in X-axis direction and in Y-axis direction, transferred from the main CPU 1, in the form of register set data. The CPU 193 of the FLCD interface 19 detects a video-display position within the image-display area by reading the video-data area information.

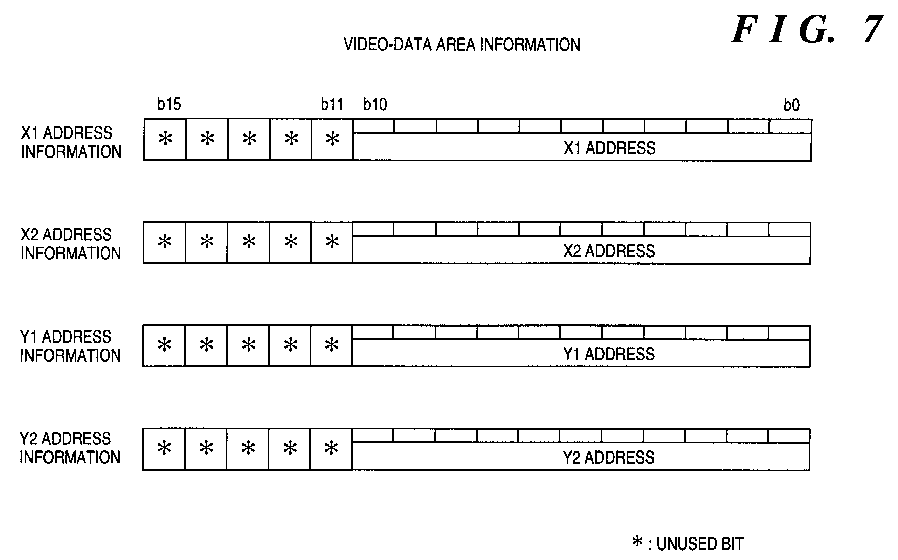

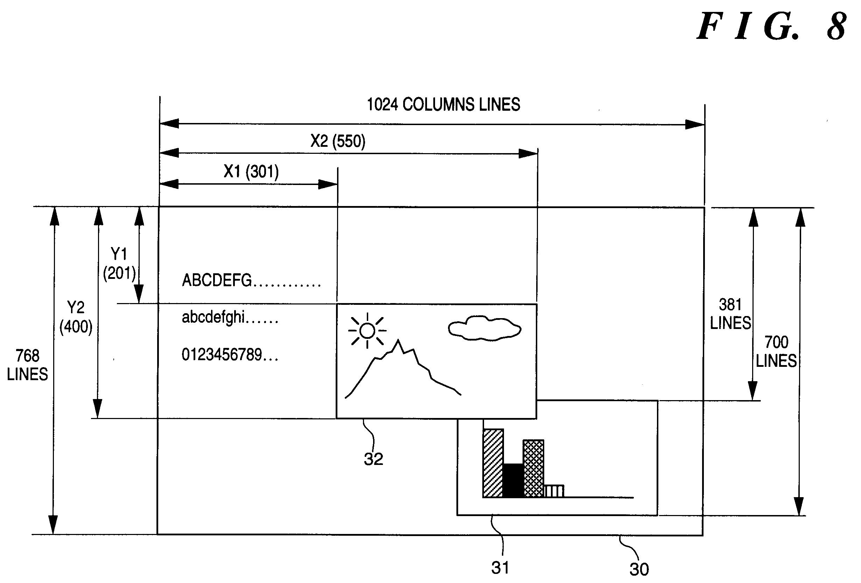

Fig. 7 shows an example of the video-data area information. Fig. 8 shows the relation between the video-data area information in Fig. 7 and the display screen.

In Fig. 8, numeral 30 denotes an image-display area for displaying an image based on image data read out of the VRAM 192 of the FLCD interface 19. On the image-display area 30, characters and a graph 31 are displayed, at first. Numeral 32 denotes a video-display area for displaying video images outputted from the video interface 21; X1, the number of pixels in a horizontal direction, indicating a video-display start position assuming that the left end of the video-display area is "0"; X2, the number of pixels in the horizontal direction, indicating a video-display end position assuming that the left end of the video-display area is "0"; Y1, the number of pixels in a vertical direction, indicating a video-display start position assuming that the top end of the video-display area is "0"; and Y2, the number of pixels in the vertical direction, indicating a video-display end portion assuming that the top end of the video-display area is "0".

The window controller 214 generates a vertical synchronizing signal indicative of the head of the image-display area and a horizontal synchronizing signal indicative of the head of each display line. The SVGA controller 191 of the FLCD interface 19 reads image data by sequential scanning or skipped scanning, in accordance with the vertical and horizontal synchronizing signals, and transfers the read data to the display-data switching device 195. Further, after the window controller 214 of the video interface 21 has performed processing on input three primary color signals R, G and B, in accordance with register set data from the main CPU 1, it judges a video-display area from the vertical synchronizing signal, the horizontal synchronizing signal and the pixel clock, and transfers the video data while reading the video data by sequential/skipped scanning.

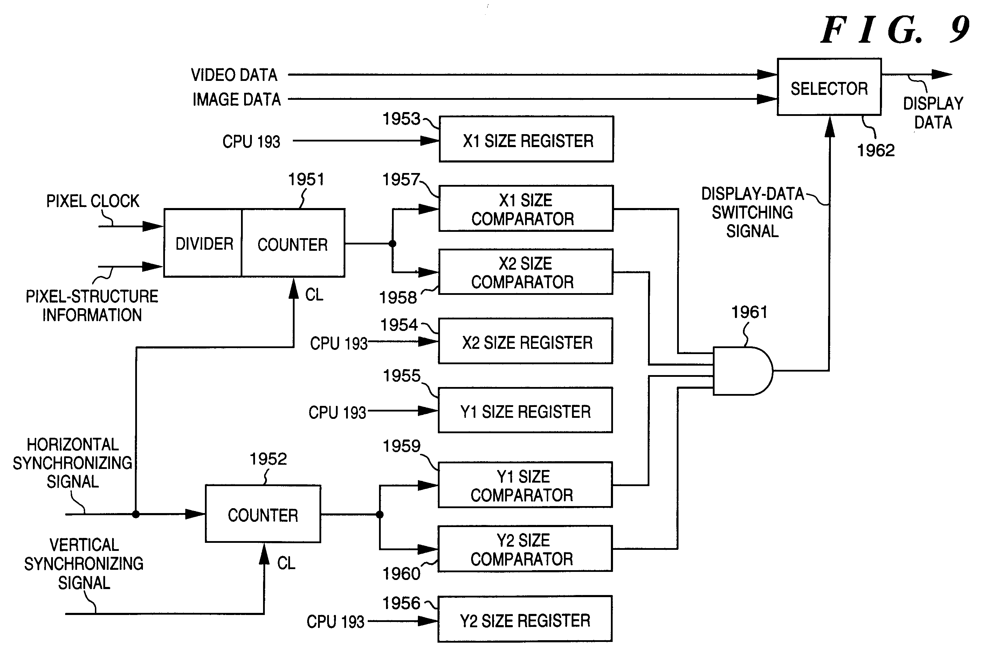

Fig. 9 shows the construction of the display-data switching device 195 of the present embodiment.

The operation of the display-data switching device 195 where video data from the video interface 21 and image data from the SVGA controller 191 are synthesized and outputted as display data to the FLCD 20 will be described using the example of image screen in Fig. 8. In the image-display area 30, the number of pixels in the horizontal direction is 1024; the number of pixels in the vertical direction is 768; the value of X1 is 301; X2, 550; Y1, 201; and Y2, 400.

In Fig. 9, numeral 1951 denotes a counter for counting the number of horizontal pixels. It is initialized by the horizontal synchronizing signal, and it counts up at a rising edge of the pixel clock. The counter 1951 has a divider which divides the pixel clock in accordance with the number of bits per pixel, based on pixel-structure information set by the CPU 193. The divided pixel clock is used as a clock for the counter. For example, when one pixel comprises one bit, the pixel clock is used as a counter clock without being divided. If one pixel comprises four bits (i.e., 16 color display or 16 level display), the pixel clock is divided by four and used as a counter clock. A counter 1952 counts the number of pixels in the vertical direction. It is initialized by the vertical synchronizing signal, and it counts up in synchronization with a rising edge of the horizontal synchronizing signal.

The CPU 193 sets values of video-data area information, read out of the video interface 21, respectively at an X1 size register (horizontal address register) 1953, an X2 size register (horizontal address register) 1954, a Y1 size register (vertical address register) 1955 and Y2 size register (vertical address register) 1956.

An X1 size comparator 1957 compares the value of the X1 size register 1953 ("301" in this example) with the value of the counter 1951, and if the counter 1951 value is equal to of the X1 size register 1953 value or greater, sets its output level to a high level "1". An X2 size comparator 1958 compares the value of the X2 size register 1954 ("550") with the counter 1951 value, and if the counter 1951 value is equal to the X2 size register 1954 value or less, sets its output level to a high level "1".

A Y1 size comparator 1959 compares the value of the Y1 size register 1955 ("201") with the value of the counter 1952, and if the counter 1952 value is equal to the Y1 size register 1955 value or greater, sets its output level to a high level "1". A Y2 size comparator 1960 compares the value of the Y2 size register 1956 ("400") with the counter 1952 value, and if the counter 1952 value is equal to the Y2 size register 1956 value or less, sets its output level to a high level "1".

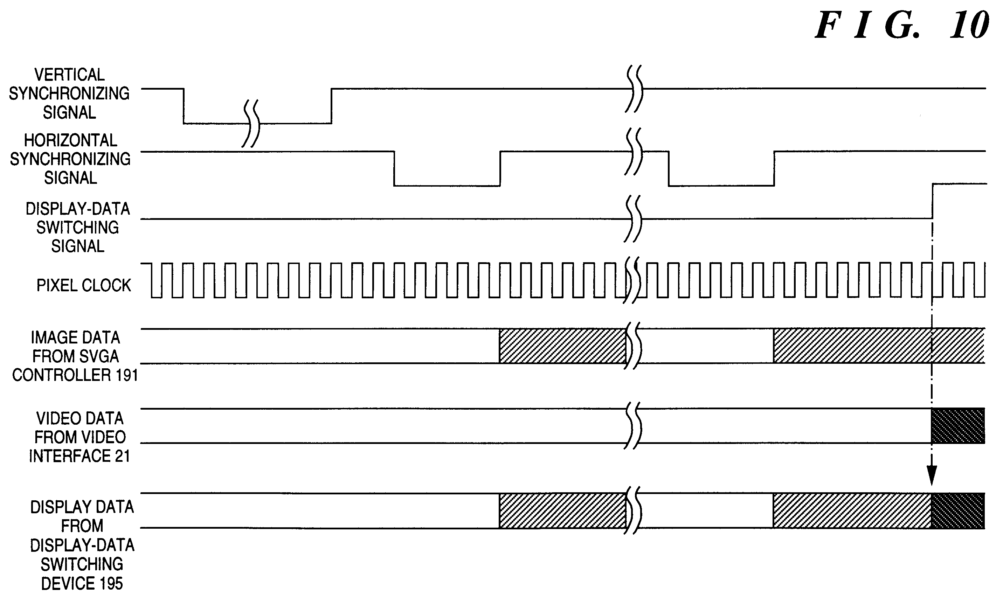

The respective outputs from the X1 size comparator 1957, the X2 size comparator 1958, the Y1 size comparator 1959 and the Y2 size comparator 1960 enter a four-input AND gate 1961. When all the input values are the high level "1", the four-input AND gate 1961 outputs a high level "1" as a display-data switching signal to a selector 1962. The selector 1962 selects one of video data and image data, in accordance with the voltage level of the display-data switching signal, and outputs the selected data as display data for the FLCD 20, to a halftone processor 194. Fig. 10 shows this operations. In this example, when the display-data switching signal is at a low level "0", the image data is outputted as display data, while when the display-data switching signal is at the high level "1", the video data is outputted as display data.

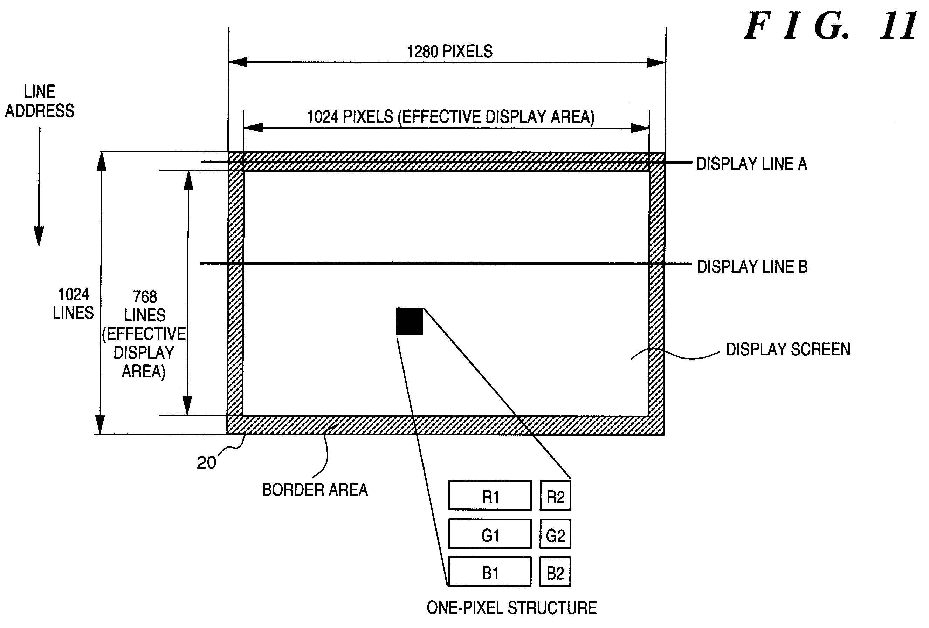

The halftone processor 194 converts 256 levels/colors multivalue display data, represented by respective 8-bit R, G and B data, into binary pixel data corresponding to each pixel of the display screen of the FLCD 20. In this embodiment, one pixel of the display screen has display cells for each color, as (R1,R2), (G1,G2) and (B1,B2) in Fig. 11, having area sizes different from each other. In this case, data for one pixel has respectively 2 bits for each color (R1, R2, G1, G2, B1 and B2). Accordingly, the halftone processor 194 converts 8-bit/color display data into 2-bit/color data (i.e., four-value/color data). Note that the halftone processor 194 may have a predetermined processing circuit, otherwise, as shown in Fig. 2A, processing or processing condition(s) may be changed in accordance with information such as processing mode, a total number of pixels, a band width etc. from the CPU 193. For example, in a case an error-diffusion method is used, a band width and a total number of pixels are used for setting a unit processing range.

As described above, according to the present embodiment, display data in the VRAM 192 is stored as multivalue data of respective 8-bit R, G and B color data, and binarized when it is read out for display. The main CPU 1 can access the FLCD 20 side similar to a case where a CRT is used, and ensure compatibility with a CRT.

Note that the method used in binarization processing may be a well-known method such as an error-diffusion method, an average density method, a dither method etc.

Again returning to Fig. 2A, the display data process by the halftone processor 194 is inputted into a synthesizer 196, in which the data is synthesized with border-pattern data from the CPU 193, and stored into the VRAM 199. A border generator 197 generates pixel data of a border area on the display screen of the FLCD 20. That is, as shown in Fig. 11, the display screen of the FLCD 20 has 1024 lines having 1280 pixels, wherein a border area not used for display surrounds the display area. As an effective display area of image data outputted from the SVGA controller 191 is 800 pixels × 600 lines, the FLCD 20 has 640 pixels × 480 lines and the like, as well as 1024 pixels × 768 lines of the present embodiment. In any case, image area except the effective display area is a border area.

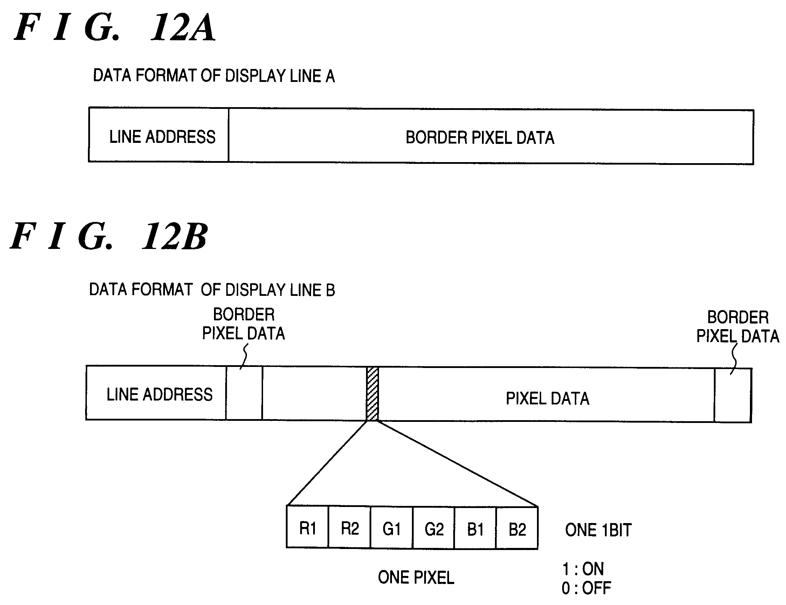

In consideration of the border area, the format of the pixel data transferred to the FLCD 20 is as shown in Fig. 12A or 12B. Fig. 12A shows a data format of a display line A, i.e., all of the line are included in the border area; 12B, a data format of a display line B, i.e., which is used for display. The data format of the display line A has a line address at the head, and border pixel data after the line address. In the data format of the display line B, as the both ends of the line are included in the border area, the data format has a line address at the head, then border pixel data, pixel data, and border pixel data.

The border pixel data generated by the border generator 197 is serially synthesized with display data from the halftone processor 194. The synthesized data is stored into the VRAM 199 via a memory controller 198.

The memory controller 198, in accordance with an output-requirement signal HSYNC outputted from the FLCD 20, requiring output of display information, reads display data corresponding to a required-line address from the CPU 193, synthesizes the read data with the line address, and outputs the data to the FLCD 20.

The CPU 193, having a function for serial-communication with the FLCD 20, transmits a command signal and a reset signal, and receives trimmer information and other status information from the FLCD 20.

In Fig. 8, among character data and graphic data of the graphic 31, corresponding to images in the image-display area 30, the character data is not updated, but the graphic data is under graph-drawing operation. The CPU 193 is informed of the area being updated in the VRAM 192, as partial-rewrite line-flag information from the SVGA controller 191. In Fig. 8, the line addresses of the graphic data are 381st line to 700th line. Further, the CPU 193 is informed of displayed area of video data as video-data area information from the video interface 21. In Fig. 8, the line addresses of the display area of the video data are 201st line to 400th line.

The video data transferred from the video interface 21 is a moving image data updated at 30 frames/sec. To improve display quality, it is necessary to display of the video data with the highest priority. Then, from the 201st to 400th line of the video-display area 32 are displayed by non-interlaced scanning. The 401st to 700th line of the graphic 31 has the next priority, so this area is displayed by 4-interlaced scanning. The other areas have lower priorities, so they are displayed by 32-interlaced scanning. The relation between the above determined line addresses and interlace modes is as follows.

TABLE 1

| Line Address No. | Interlace Mode |
|---|---|
| 1-200 | 32 interlace |
| 201-400 | non-interlace |
| 401-700 | 4 interlace |
| 701-768 | 32 interlace |

This relation is generated in the RAM 193b based on partial-rewrite flag-information from the SVGA controller 191 and video-data area information from the video interface 21. Required-line addresses are sequentially outputted to the memory controller 198.

Display by 4-interlaced scanning is, e.g., to select a line address 1 first, then select a line address 5 secondly, and select a line address 9 thirdly, i.e., to select a line address by three lines. Similarly, 32-interlace scanning is, e.g., to select the line address 1 first, then select a line address 33 secondly, and select a line address 65 thirdly, i.e., to select a line address by 31 lines.

In accordance with the above scannings, all the line addresses of the video display area 32 are selected by non-interlaced scanning, and the line addresses of the area of the graphic 31 are selected every 4 lines, and the other areas are selected every 321 lines. The line-address selection of this example is as shown in TABLE 2:

TABLE 2

| Line Address Selected at First Scanning | Line Address Selected at Second Scanning | Line Address Selected at Third Scanning | .... |
|---|---|---|---|
| 1 | 2 | 3 | |
| 33 | 34 | 35 | |
| 65 | 66 | 67 | |
| 97 | 98 | 99 | |
| 129 | 130 | 131 | |
| 161 | 162 | 163 | |
| 193 | 194 | 195 | |
| 201 | 201 | 201 | |
| 202 | 202 | 202 | |
| 203 | 203 | 203 | |
| 204 | 204 | 204 | |
| . | . | . | |
| . | . | . | |
| . | . | . | |
| 397 | 397 | 397 | |
| 398 | 398 | 398 | |
| 399 | 399 | 399 | |
| 400 | 400 | 400 | |
| 401 | 402 | 403 | |
| 405 | 406 | 407 | |
| 409 | 410 | 411 | |
| . | . | . | |
| . | . | . | |
| . | . | . | |
| 689 | 690 | 691 | |
| 693 | 694 | 695 | |
| 697 | 698 | 699 | |
| 701 | 702 | 703 | |
| 733 | 734 | 735 | |
| 765 | 766 | 767 | |

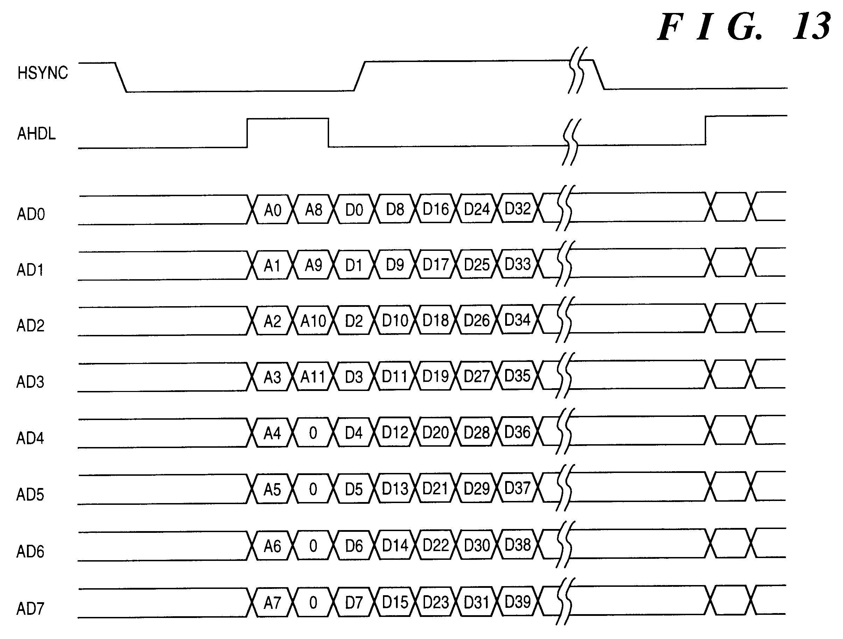

The display data and display line addresses read out of the VRAM 199, in accordance with the required-line addresses generated as above, are transferred to the FLCD 20 and used for display. Fig. 13 shows the timing of the display operation. In this example, the display line addresses and the pixel data are transferred as 8-bit parallel data AD0 to AD7 to the FLCD 20. First, the synchronizing signal HSYNC indicative of data-transfer requirement is inputted from the FLCD 20 into the memory controller 198. The memory controller 198 reads display data from the VRAM 199 in accordance with the required line addresses from the CPU 193, and outputs the data with display line addresses to the FLCD 20. At the same time, the memory controller 198 transfers an AHDL signal for discriminating the display line address from the pixel data, to the FLCD 20. When the AHDL signal is at a high level "1", it indicates that the display line address is outputted to the signal lines AD0 to AD7, while when the AHDL signal is at a low level "0", it indicates that the pixel data is outputted to the signal lines AD0 to AD7. To transfer the display line address, the AHDL signal is set to "1", and after the transmission, to transfer the display data to the FLCD 20, the AHDL signal is set to "0".

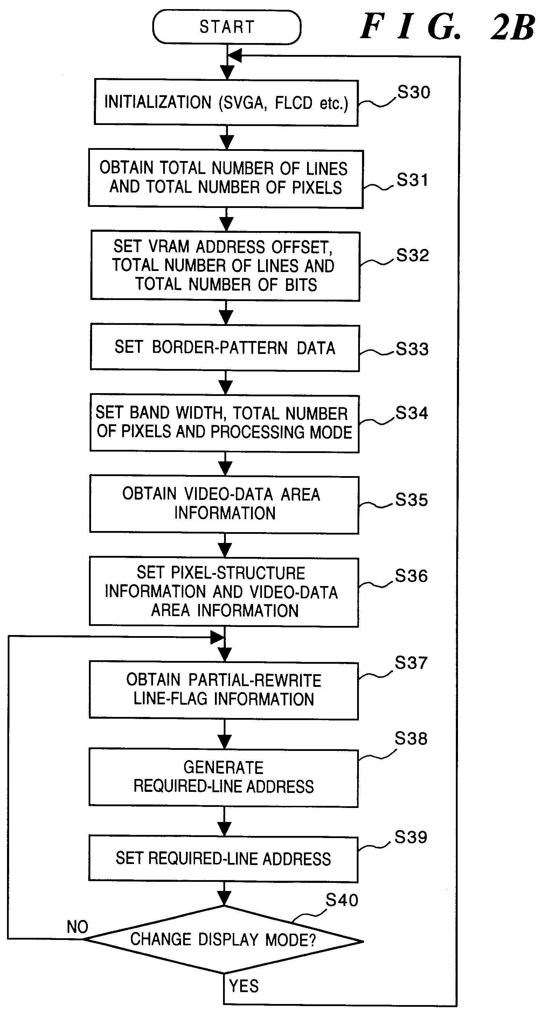

Fig. 2B is a flowchart showing processing procedure, stored in the ROM 193a, executed by CPU 193 with using the RAM 193b. Note that after step S10 thus S13 or S20 thus S22 are performed as described in Fig. 1B, the flow shown in Fib 2B is performed .

First, at step S30, initialization of the SVGA controller 191 and the FLCD 20 and the other units is performed. At step S31, the total number of lines and the total number of pixels, set by the CPU 1 at step S11 in Fig. 1B, are obtained. At step S32, VRAM address offset and the total number of line bits are calculated based on the obtained total number of lines and total number of pixels, and set, with the total number of lines, at the SVGA controller 191. At step S33, border-pattern data is set at the border generator 197. Next, at step S34, a band width, the total number of pixels and a processing mode are set at the halftone processor 194. Note that processing mode and the like may be automatically changed, based on display data or the FLCD 20, by key-input.

At step S35, the video-data area information set at step S21 in Fig. 1B is obtained from the video interface 21. At step S36, pixel-structure information and the video-data area information are set at the display-data switching device 195.

Note that the pixel-structure information is also changed in accordance with the image data.

If there is no video-data display instruction, as the display size as the video-data area information is "0", therefore, the display-data switching device 195 always outputs image data.

The order of procedure at steps S31 to S36 can be performed in any sequence or in parallel.

At step S37, the partial-rewrite line-flag information is obtained from the SVGA controller 191. At step S38, a required-line address is generated based on the video-data area information and the partial-rewrite line-flag information, and at step S39, the generated required-line address is set at the memory controller 198.

If the display mode is not changed, the operation at steps S37 to S40 is repeated to update display on the FLCD 20. If the display mode is changed, the process returns from step S40 to S30, to restart the process. Actually, while the system is operating continuously, the FLCD 20 always performs display operation, and for this reason, the re-setting at steps S30 to S34 may be passed even if there is change of display mode. Note that the set values of processing program of the CPU 193 or mode may be downloaded from a host computer or CPU 1.

[Second Embodiment]

In the first embodiment, image data outputted based on a display requirement from the main CPU 1 and video data inputted by the video interface 21 are synthesized and stored into the VRAM 199, and upon reading the data out of the VRAM 199 and displaying the read data, a mode of interlaced scanning and priority order are determined in accordance with the type of image data or video data, and partial-rewrite control is realized in accordance with the priority order.

In a second embodiment, a temperature around the FLCD 20 is detected, and utilized as peripheral temperature information to determine an interlaced-scanning mode.

The speed of partial-rewrite in the FLCD 20 changes in accordance with its peripheral temperature. Therefore, update period per one line, i.e., HSYNC period changes. Accordingly, changing the number of lines of inter-laced scanning based on the FLCD peripheral temperature attains more precise display control and improves display quality.

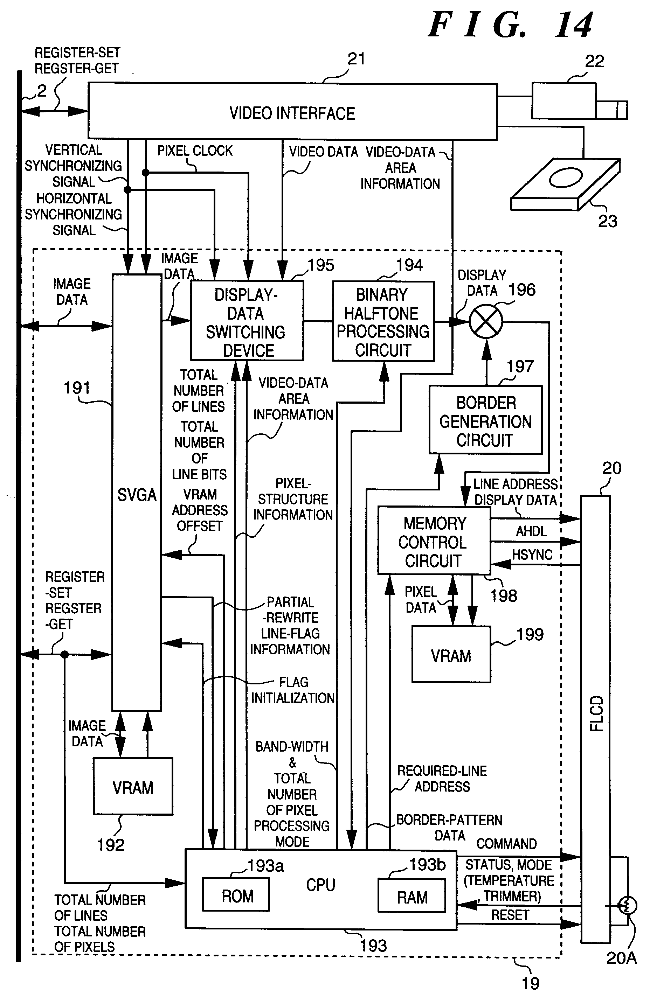

Fig. 14 shows the construction of the FLCD interface 19 according to the second embodiment.

In Fig. 14, numeral 20A denotes a temperature sensor for monitoring peripheral temperature status of the FLCD 20. in this embodiment, the peripheral temperature status detected by the temperature sensor 20A is informed to the FLCD interface 19 via a serial-communication function for receiving trimmer information and other status informations from the FLCD 20.

In this embodiment, the CPU 193 of the FLCD interface 19 determines a required-line address to output display data to the FLCD 20, indicative of rewriting-performed area with respect to the VRAM 192, from partial-rewrite line-flag information from the SVGA controller 191, video-data area information, indicative of video display area, from the video interface 21, and peripheral temperature information on peripheral temperature of the FLCD 20, transmitted from the FLCD 20 via the serial-communication function, and outputs the determined required-line address to the memory controller 198.

Similar to the first embodiment, when display updating is performed, the following display-update operation as shown in Fig. 8 is performed.

In Fig. 8, regarding the characters in the image-display area 30 and the graphic 31, the character data is not updated [and rewrite is not performed], and the graphic 31 is currently being generated. TABLE 3 shows the relation between the line addresses and the interlaced scanning modes in the present embodiment.

TABLE 3

| Temperature Information | Line Address No. | Interlace Mode |
|---|---|---|
| 00 | 1-200 | 64 interlace |
| | 201-400 | 2 interlace |
| | 401-700 | 16 interlace |
| | 701-768 | 64 interlace |
| 01 | 1-200 | 64 interlace |
| | 201-400 | non-interlace |
| | 401-700 | 16 interlace |
| | 701-768 | 64 interlace |
| 10 | 1-200 | 32 interlace |
| | 201-400 | non-interlace |
| | 401-700 | 8 interlace |
| | 701-768 | 32 interlace |
| 11 | 1-200 | 32 interlace |
| | 201-400 | non-interlace |
| | 401-700 | 4 interlace |
| | 701-768 | 32 interlace |

In this embodiment, the peripheral temperature information of the FLCD 20 informed to the FLCD interface 19 is 2-bit data which can indicate four status's.

The peripheral temperature information from the FLCD 20 stepwisely changes from "00" to "11" in correspondence with the peripheral temperature of the FLCD 20. When the peripheral temperature of the FLCD 20 is low, the peripheral temperature information is "00"; and when it is high, "11". When the peripheral temperature of the FLCD 20 is high and a rewrite speed is high, the number of lines updated at one scanning is increased, then, as the peripheral temperature falls, the number of lines updated at one scanning out of the video display area is decreased. When the peripheral temperature information is "00", rewriting of the video data within the video display area is 2 interlaced scanning, thus improves virtual rewriting speed.

As described above, according to the embodiment, adding peripheral temperature information of the FLCD 20, as a factor for determination of the number of lines updated at one scanning, attains more precise display control which maintains display quality not influenced by peripheral temperature.

[Third Embodiment]

In the first embodiment, to generate pixel data of a border area not used for display, surrounding a display area of the display screen of the FLCD 20, the border generator 197 generates border pixel data, and the synthesizer 196 serially synthesizes the border pixel data with pixel data from the halftone processor 194, thereafter, stores the synthesized data into the VRAM 199 via the memory controller 198.

In a third embodiment, pixel data of a border area is generated without using the border generator 197 and the synthesizer 196.

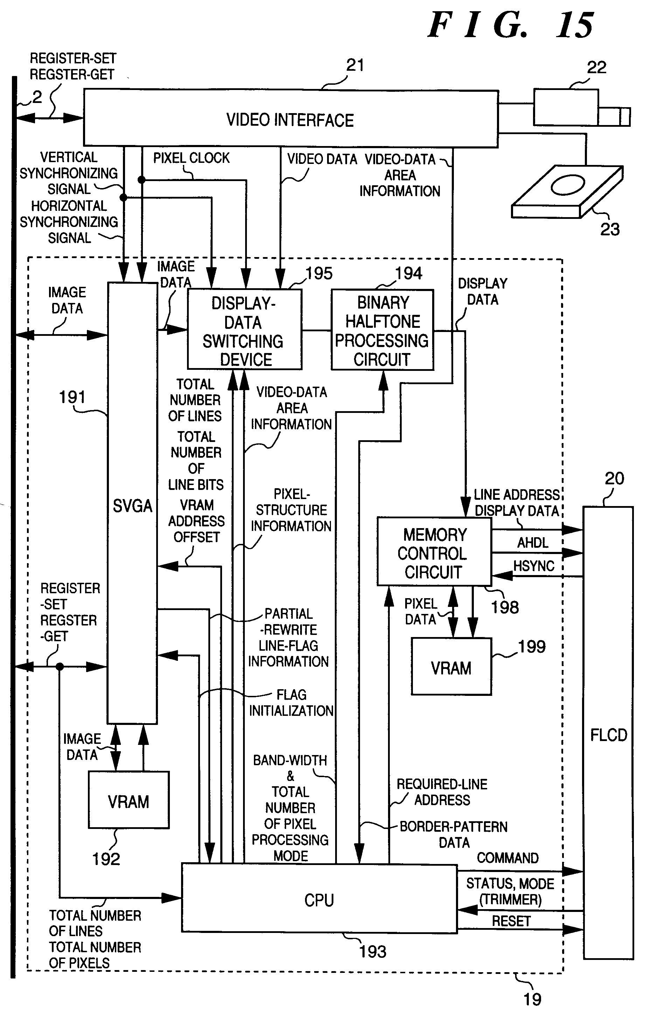

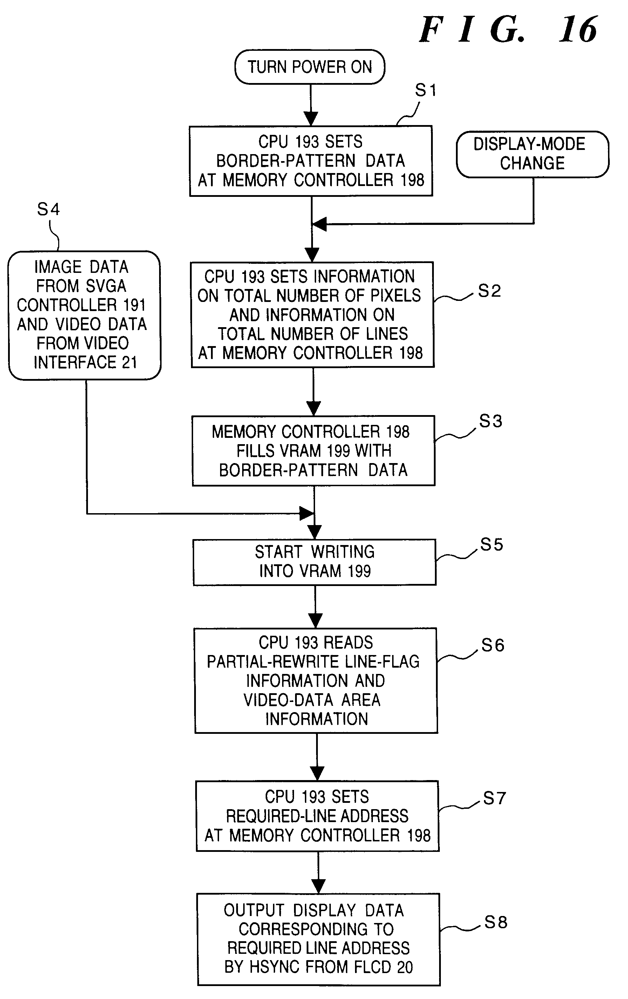

Fig. 15 shows the construction of the FLCD interface 19 according to the third embodiment. In Fig. 15, border-pattern data outputted from the CPU 193 is inputted into the memory controller 198. When the power is turned on or display mode is changed, thereafter, the memory controller 198 fills the VRAM 199 with the border-pattern data as all the contents thereof, and writes display data sent by sequentially scanning or skipped scanning, from the halftone processor 194, into the VRAM 199. Fig. 16 is a flowchart showing the processing of the memory controller 198 according to the present embodiment.

First, when the power of the present system is turned on, the CPU 193 writes border-pattern data into the memory controller 198 (S1), and the memory controller 198 writes the border-pattern data in the VRAM 199 as all the contents thereof (S2 and S3). Thereafter, image data from the SVGA controller 191 or video data from the video interface 21 is received via the halftone processor 194 (S4), the memory controller 198 starts writing of the display data into the VRAM 199 (S5). The memory controller 198 detects a display mode (S6) of the display data from the halftone processor 194, from the total number of pixels and the total number of lines set by the CPU 193. The memory controller 198 calculates an address to the VRAM 199 so that a display range of an effective display area at each display mode is located at about the center of the display screen of the FLCD 20, and stores the display data into the VRAM 199 sent from the halftone processor 194, in accordance with the VRAM address. The display data stored in the VRAM 199 is read out, to which a border-pattern data added, in accordance with a required-line address set by the CPU 193 (S7) in the order of line addresses shown in TABLE 2 of the first embodiment, and when the synchronizing signal HSYNC indicative of data-transfer requirement from the FLCD 20 is outputted to the memory controller 198, outputted to the FLCD 20 with the line address.

While the FLCD 20 performs display, if display mode is changed, the CPU 193 sets information on a total number of pixels and information on a total number of lines after the display mode change at the memory controller 198. The memory controller 198 detects the display mode change from the information on total number of pixels and the information on the total number of lines, then temporarily stops writing of display data sent from the halftone processor 194 into the VRAM 199. After the memory controller 198 has filled the VRAM 199 with the border-pattern data, it restarts writing of display data from the halftone processor 194.

By the above processing, an area except an effective display area on the FLCD display screen, i.e., pixel data of the border area is generated on the VRAM 199 immediately after the power is turned on or the display mode is changed. This omits generation of pixel data of the border area for each display data sent from the halftone processor 194.

As described above, according to the present embodiment, when the power is turned on or the display mode is changed, the contents of the VRAM 199 is filled with border-pattern data. This omits the border generator 197 for generating pixel data of the border area and the synthesizer 196, thus simplifies the circuitry.

Note that in the present embodiment, video data sent from the video interface 21 is synthesized with image data from the main CPU 1. In this case, it is possible to insert the image data from the main CPU 1 into the video data.

As described above, according to the present invention, upon synthesizing video information from a video-signal input device with image information from a main CPU, in a cycle of sequential rewriting of the whole image, an area where display status is updated is detected based on the video information from the video-signal input device, and an area where display status is updated is detected based on the image information from the main CPU, then priority order of display-updating is determined, and display information is displayed in accordance with the priority order. This obtains high-quality display images utilizing partial-rewrite control characteristic of a display device having display-status maintainability.

The present invention is especially advantageous in the above-mentioned point when it is applied to an FLCD. Further, when the power of a system is turned on or the display mode is changed, a memory is filled with specific data. This enables to generate pixel data of a border area easily, and omits a circuit for generating pixel data of border area and a circuit for synthesizing the pixel data of border area and display data, thus simplifies the circuitry.

The present invention can be applied to a system constituted by a plurality of devices (e.g., host computer, interface, reader, printer) or to an apparatus comprising a single device (e.g., copy machine, facsimile).

Further, the object of the present invention can be also achieved by providing a storage medium storing program codes for performing the aforesaid processes to a system or an apparatus, reading the program codes with a computer (e.g., CPU, MPU) of the system or apparatus from the storage medium, then executing the program.

In this case, the program codes read from the storage medium realize the functions according to the embodiments, and the storage medium storing the program codes constitutes the invention.

Further, the storage medium, such as a floppy disk, a hard disk, an optical disk, a magneto-optical disk, CD-ROM, CD-R, a magnetic tape, a non-volatile type memory card, and ROM can be used for providing the program codes.

Furthermore, besides aforesaid functions according to the above embodiments are realized by executing the program codes which are read by a computer, the present invention includes a case where an OS (operating system) or the like working on the computer performs a part or entire processes in accordance with designations of the program codes and realizes functions according to the above embodiments.

Furthermore, the present invention also includes a case where, after the program codes read from the storage medium are written in a function expansion card which is inserted into the computer or in a memory provided in a function expansion unit which is connected to the computer, CPU or the like contained in the function expansion card or unit performs a part or entire process in accordance with designations of the program codes and realizes functions of the above embodiments.

The present invention is not limited to the above embodiments and various changes and modifications can be made within the spirit and scope of the present invention. Therefore, to apprise the public of the scope of the present invention, the following claims are made.

A display control method for a display apparatus having display-status maintainability which enables partial-rewrite control function in a video capture system, and a display system having the display device. An area where image information from a CPU is updated, and an area where video information from a video-signal input device is combined with the image information from the CPU, are detected, then, video information and image information of the area to be updated is outputted in higher priority than image information of other areas. The output of the image information of the detected area is realized by scanning the image information of the area where the video information from the video-signal input device is displayed, the image information of the area where the image information from the CPU is updated, and the image information of other areas, respectively in intervals different from each other.

## Claims

1. A display control method for performing display on a surface of a display device, based on video information from a video-signal input device and image information from a central processing unit (CPU), characterized in comprising the steps of:
   detecting (1918) an area of the surface where the image information from the CPU is updated;
   detecting (214) an area of the surface where the video information from the video-input unit is displayed; and
   outputting (193, 198) the video information and image information of the area to be updated to the display device, in higher priority than image information of other areas, based on information detected at said detection steps.

2. The display control method according to claim 1, wherein at said outputting step, output of the video information and the image information in higher priority than image information of other areas is realized by scanning the area where the video information from the video-signal input device is updated, the area where the image information from the CPU is updated, and the other areas, respectively in interlacing intervals different from each other.

3. The display control method according to claim 2, wherein information on peripheral temperature of the display device is further used as a factor of determining the interlacing interval.

4. The display control method according to any of claims 1 to 3, wherein the display device is a ferroelectric liquid crystal display device having display-status maintainability.

5. A display control apparatus for performing display on a surface of a display device, based on video information from a video-signal input device and image information from a central processing unit (CPU), characterized in comprising:
   first detection means (1918) for detecting an area where the image information from the CPU is updated;
   second detection means (214) for detecting an area where the video information from the video-signal input device is displayed; and
   display control means (193, 198) for outputting the video information and image information of the area to be updated to the display device, in higher priority than image information of other areas, based on the areas detected by said first and second detection means.

6. The display control apparatus according to claim 5, wherein said display control means includes scanning control means for scanning the area where the video information from the video-signal input device is updated, the area where the image information from the CPU is updated, and the other areas, respectively in interlacing intervals different from each other.

7. The display control apparatus according to claim 6, wherein said display control means further uses information on peripheral temperature of the display device as a factor of determining the interlacing interval.

8. A display control apparatus for performing display on a surface of a display device, based on video information from a video-signal input device and image information from a central processing unit (CPU), characterized in comprising:
   first memory means (192) for temporarily storing the image information from the CPU;
   combining means (195) for generating display information by combining the video information from the video-signal input device with the image information outputted from said first memory means;
   second memory means (199) for temporarily storing the display information generated by said combining means;

first detection means (1918) for detecting an area in said first memory means, where stored consent is updated;

second detection means (214) for detecting a combining position where the video information from the video-signal input device is combined with the image information outputted from said first memory means;

display control means (193, 198) for outputting the video information and image information of the area to be updated out of said second memory means, in higher priority than image information of other areas, based on information detected by said first and second detection means.

9. A display control apparatus for performing display on a surface of a display device, based on video information from a video-signal input device and image information from a central processing unit (CPU), characterized in comprising:

first memory means (192) for temporarily storing the image information from the CPU;

combining means (195) for generating display information by combining the video information from the video-signal input device with the image information outputted from said first memory means;

second memory means (199) for temporarily storing the display information generated by said synthesizing means;

first detection means (1918) for detecting an area in said first memory means, where stored content is updated;

second detection means (214) for detecting a combining position where the video information from the video-signal input device is combined with the image information outputted from said first memory means;

display control means (193, 198) for outputting the video information and image information of the area to be updated out of said second memory means, in higher priority than image information of other areas, based on information detected by said first and second detection means; and

writing means (196, 197) for writing predetermined information in remainder of said second memory means other than an area used for temporarily storing the display information generated by said combining means.

10. The display control apparatus according to any of claim 8 or 9, wherein said display control means includes scanning control means for scanning the area where the video information from the video-signal input device is updated, the area where the image information from the CPU is updated, and the other areas, respectively in interlacing intervals different from each other.

11. The display control apparatus according to claim 10, wherein said display control means further uses information on peripheral temperature of the display device as a factor of determining the interlacing interval.

12. The display control apparatus according to any of claims 5 to 11, wherein the display device is a ferroelectric liquid crystal display device having display-status maintainability.

13. A display system having a display control apparatus according to any of claims 5 to 11 and a ferroelectric liquid crystal display device.

*F I G. 1A*

# *F I G. 1B*

```
┌─────────────────┐
│  KEY-INTERRUPT  │
│     ROUTINE     │
└─────────────────┘
         │
         ▼                                              S20
      ╱DISPLAY BASED╲   NO          ╱  DISPLAY    ╲   NO
     ╱ ON IMAGE DATA? ╲─────────▶  ╱BASED ON VIDEO ╲────────┐
      ╲    S10       ╱             ╲    DATA      ╱         │
         │                            │                     ▼
        YES                          YES              ┌─────────────┐
         │                            │               │   OTHER     │
         ▼                            ▼               │ PROCESSINGS │
┌─────────────────┐         ┌──────────────────┐     └─────────────┘
│ SET TOTAL NUMBER│ S11     │SET VIDEO-DATA AREA│ S21
│ OF LINES AND TOTAL│       │   INFORMATION    │
│ NUMBER OF PIXELS│         │ AT VIDEO INTERFACE│
│ AT FLCD INTERFACE│        └──────────────────┘
└─────────────────┘                 │
         │                          ▼
         ▼                 ┌──────────────────┐
┌─────────────────┐ S12    │DESIGNATE TRANSFER│ S22
│ SET TRANSFER    │        │ ORIGINATOR OF VIDEO│
│ ORIGINATOR OF IMAGE│     │ DATA AND PROGRAM │
│ DATA TO DMAC    │        └──────────────────┘
└─────────────────┘                 │
         │                          ▼
         ▼                       ╱  FLCD  ╲  S23
┌─────────────────┐ S13    NO   ╱INTERFACE ╲
│ SET TRANSFER    │      ◀──────╲  READY?  ╱
│ DESTINATION OF  │             ╲        ╱
│ IMAGE DATA TO   │                │
│ FLCD INTERFACE  │               YES
└─────────────────┘                │
         │                         ▼
         ▼                 ┌──────────────────┐
      ╱  FLCD  ╲  S14      │ START VIDEO-DATA │ S24
 NO  ╱INTERFACE ╲          │    TRANSFER      │
◀────╲ READY?  ╱           └──────────────────┘
      ╲      ╱                      │
        │                          │
       YES    S15                  │
        │                          │
        ▼                          │
┌─────────────────┐                │
│ START IMAGE-DATA│                │
│    TRANSFER     │                │
└─────────────────┘                │
        │◀─────────────────────────┘
        ▼
 ┌─────────────┐
 │   RETURN    │
 └─────────────┘
```

# F I G. 1C

```
      IMAGE-DATA                          VIDEO-DATA
    DISPLAY MODULE                      DISPLAY MODULE
          |                                   |
          |  S51                              |  S61
          v                                   v
 ┌─────────────────────┐           ┌─────────────────────┐
 │   SET TOTAL NUMBER  │           │     SET SIZE,        │
 │  OF LINES AND TOTAL │           │ NUMBER OF COLORS etc.│
 │   NUMBER OF PIXELS AT│          │  AT VIDEO INTERFACE  │
 │    FLCD INTERFACE   │           └─────────────────────┘
 └─────────────────────┘                     |
          |                                   |  S62
          |  S52                              v
          v                          ┌─────────────────────┐
 ┌─────────────────────┐            │   SET DISPLAY AREA   │
 │    SET TRANSFER     │            │    OF VIDEO DATA     │
 │   ORIGINATOR OF     │            │   AT FLCD INTERFACE, │
 │ IMAGE DATA TO DMAC  │            │ SET FLCD INTERFACE TO│
 └─────────────────────┘            │ VIDEO-DATA DISPLAY   │
          |                          │   ENABLE STATUS      │
          |  S53                     └─────────────────────┘
          v
 ┌─────────────────────┐
 │    SET TRANSFER     │
 │  DESTINATION TO     │
 │   FLCD INTERFACE    │
 └─────────────────────┘
          |
          |<─────────────────┐
          v  S54             │
         / \                 │
   NO   /   \   FLCD         │
  ─────<     >───────────────┘
        \   / INTERFACE READY?
         \ /
          |
          | YES   S55
          v
 ┌─────────────────────┐
 │       START         │
 │ IMAGE-DATA TRANSFER │
 └─────────────────────┘
```

*F I G. 2A*

*F I G.  2B*

```
                    START

      INITIALIZATION (SVGA, FLCD etc.)          S30

      OBTAIN TOTAL NUMBER OF LINES
      AND TOTAL NUMBER OF PIXELS                S31

      SET VRAM ADDRESS OFFSET,
      TOTAL NUMBER OF LINES AND                 S32
      TOTAL NUMBER OF BITS

      SET BORDER-PATTERN DATA                   S33

      SET BAND WIDTH, TOTAL NUMBER              S34
      OF PIXELS AND PROCESSING MODE

      OBTAIN VIDEO-DATA AREA                    S35
      INFORMATION

      SET PIXEL-STRUCTURE                       S36
      INFORMATION AND VIDEO-DATA
      AREA INFORMATION

      OBTAIN PARTIAL-REWRITE                    S37
      LINE-FLAG INFORMATION

      GENERATE                                  S38
      REQUIRED-LINE ADDRESS

      SET REQUIRED-LINE ADDRESS                 S39

                                                S40
      NO
            CHANGE DISPLAY MODE?

                    YES
```

19

*FIG. 3*

EP 0 725 380 A1

# F I G. 4

VRAM (1) 192

VRAM HEADER ADDRESS

IMAGE-DATA START ADDRESS

LINE1

LINE 2

PIXEL

n BYTES / PIXEL

LINE N

FLCD SCREEN

LINE1

LINE 2

LINE N

WRITE INTO VRAM ADDRESS X

# *FIG. 5*

RASTER DIRECTION

PARTIAL-REWRITE
LINE-FLAG REGISTER

PARTIAL-REWRITE LINE-FLAG

192

# FIG. 6

EP 0 725 380 A1

# F I G. 7

b15            b11  b10                          b0

**X1 ADDRESS INFORMATION** | * | * | * | * | * | X1 ADDRESS

**X2 ADDRESS INFORMATION** | * | * | * | * | * | X2 ADDRESS

**Y1 ADDRESS INFORMATION** | * | * | * | * | * | Y1 ADDRESS

**Y2 ADDRESS INFORMATION** | * | * | * | * | * | Y2 ADDRESS

\* : UNUSED BIT

EP 0 725 380 A1

# F I G. 8

1024 COLUMNS LINES

X2 (550)

X1 (301)

Y1 (201)

Y2 (400)

ABCDEFG............

abcdefghi......

0123456789...

768 LINES

381 LINES

700 LINES

32

31          30

F I G. 9

*F I G.  10*

VERTICAL SYNCHRONIZING SIGNAL

HORIZONTAL SYNCHRONIZING SIGNAL

DISPLAY-DATA SWITCHING SIGNAL

PIXEL CLOCK

IMAGE DATA FROM SVGA CONTROLLER 191

VIDEO DATA FROM VIDEO INTERFACE 21

DISPLAY DATA FROM DISPLAY-DATA SWITCHING DEVICE 195

EP 0 725 380 A1

*FIG. 11*

# F I G.  12A

DATA FORMAT OF DISPLAY LINE A

| LINE ADDRESS | BORDER PIXEL DATA |
|---|---|

# F I G.  12B

DATA FORMAT  OF DISPLAY LINE B

BORDER
PIXEL DATA

BORDER
PIXEL DATA

| LINE ADDRESS | | | | PIXEL DATA | |
|---|---|---|---|---|---|

| R1 | R2 | G1 | G2 | B1 | B2 |
|---|---|---|---|---|---|

ONE 1BIT

ONE PIXEL

1 : ON
0 : OFF

EP 0 725 380 A1

EP 0 725 380 A1

*F I G.  14*

REGISTER-SET
REGSTER-GET

21

22

VIDEO INTERFACE

23

VERTICAL
SYNCHRONIZING
SIGNAL
HORIZONTAL
SYNCHRONIZING
SIGNAL

PIXEL CLOCK

VIDEO DATA   VIDEO-DATA
AREA
INFORMATION

IMAGE
DATA

195

194

DISPLAY
DATA   196

IMAGE
DATA

IMAGE
DATA

DISPLAY-
DATA
SWITCHING
DEVICE

BINARY
HALFTONE
PROCESSING
CIRCUIT

191

SVGA

TOTAL
NUMBER
OF LINES

TOTAL
NUMBER
OF
LINE BITS

VRAM
ADDRESS
OFFSET

VIDEO-DATA
AREA
INFORMATION

PIXEL-
STRUCTURE
INFORMATION

197

BORDER
GENERATION
CIRCUIT

20

LINE ADDRESS
DISPLAY DATA

AHDL

HSYNC

MEMORY
CONTROL
CIRCUIT

REGISTER
-SET
REGSTER
-GET

PARTIAL
-REWRITE
LINE-FLAG
INFORMATION

FLAG
INITIALIZATION

PIXEL
DATA

198

199

VRAM

FLCD

IMAGE
DATA

BAND-WIDTH
&
TOTAL
NUMBER
OF PIXEL
PROCESSING
MODE

REQUIRED-LINE
ADDRESS

BORDER-PATTERN
DATA   COMMAND

VRAM

192

193a

193b

STATUS, MODE
(TEMPERATURE
, TRIMMER)

ROM

CPU

RAM

RESET

TOTAL NUMBER
OF LINES
TOTAL NUMBER
OF PIXELS

193

20A

19

# F I G. 15

REGISTER-SET
REGSTER-GET

2

| VIDEO INTERFACE | 21 | 22 |

VERTICAL
SYNCHRONIZING
SIGNAL
HORIZONTAL
SYNCHRONIZING
SIGNAL

PIXEL CLOCK

VIDEO DATA VIDEO-DATA
AREA
INFORMATION

23

IMAGE
DATA

IMAGE
DATA

DISPLAY-
DATA
SWITCHING
DEVICE

195

BINARY
HALFTONE
PROCESSING
CIRCUIT

194

DISPLAY
DATA

20

191

SVGA

TOTAL
NUMBER
OF LINES

TOTAL
NUMBER
OF
LINE BITS

VRAM
ADDRESS
OFFSET

VIDEO-DATA
AREA
INFORMATION

PIXEL-
STRUCTURE
INFORMATION

LINE ADDRESS
DISPLAY DATA

MEMORY
CONTROL
CIRCUIT

AHDL

HSYNC

198

REGISTER
-SET
REGSTER
-GET

PARTIAL
-REWRITE
LINE-FLAG
INFORMATION

FLAG
INITIALIZATION

PIXEL
DATA

VRAM

199

FLCD

IMAGE
DATA

VRAM

192

BAND-WIDTH
&
TOTAL
NUMBER
OF PIXEL
PROCESSING
MODE

REQUIRED-LINE
ADDRESS

BORDER-PATTERN
DATA

COMMAND

CPU

STATUS, MODE
(TRIMMER)

RESET

TOTAL NUMBER
OF LINES
TOTAL NUMBER
OF PIXELS

193

19

*F I G.  16*

```
        ( TURN POWER ON )
               │
               │  S1
               ▼
   ┌─────────────────────────┐        ┌──────────────────┐
   │      CPU 193 SETS        │        │  DISPLAY-MODE    │
   │   BORDER-PATTERN  DATA   │        │     CHANGE       │
   │ AT MEMORY CONTROLLER 198 │        └──────────────────┘
   └─────────────────────────┘                 │
               │ ◄──────────────────────────────┘
               ▼
 S4
┌──────────────┐    ┌─────────────────────────┐
│  IMAGE DATA  │    │ CPU 193 SETS INFORMATION │
│  FROM SVGA   │    │ ON TOTAL NUMBER OF PIXELS│  S2
│CONTROLLER 191│    │    AND INFORMATION ON    │
│AND VIDEO DATA│    │   TOTAL NUMBER OF LINES  │
│  FROM VIDEO  │    │ AT MEMORY CONTROLLER 198 │
│ INTERFACE 21 │    └─────────────────────────┘
└──────────────┘                │
        │                       ▼
        │           ┌─────────────────────────┐
        │           │  MEMORY CONTROLLER 198   │  S3
        │           │     FILLS VRAM 199 WITH  │
        │           │   BORDER-PATTERN  DATA   │
        │           └─────────────────────────┘
        │                       │
        └──────────────────────►▼
                    ┌─────────────────────────┐
                    │     START  WRITING       │  S5
                    │      INTO VRAM 199       │
                    └─────────────────────────┘
                                │
                                ▼
                    ┌─────────────────────────┐
                    │     CPU 193 READS        │
                    │ PARTIAL-REWRITE LINE-FLAG│  S6
                    │     INFORMATION  AND     │
                    │     VIDEO-DATA  AREA     │
                    │       INFORMATION        │
                    └─────────────────────────┘
                                │
                                ▼
                    ┌─────────────────────────┐
                    │     CPU 193 SETS         │  S7
                    │  REQUIRED-LINE ADDRESS   │
                    │ AT MEMORY CONTROLLER 198 │
                    └─────────────────────────┘
                                │
                                ▼
                    ┌─────────────────────────┐
                    │  OUTPUT DISPLAY DATA     │
                    │    CORRESPONDING  TO     │  S8
                    │   REQUIRED LINE ADDRESS  │
                    │  BY HSYNC FROM FLCD 20   │
                    └─────────────────────────┘
```

European Patent
Office

**EUROPEAN SEARCH REPORT**

Application Number

| | DOCUMENTS CONSIDERED TO BE RELEVANT | | EP 96101274.7 |
|---|---|---|---|

| Category | Citation of document with indication, where appropriate, of relevant passages | Relevant to claim | CLASSIFICATION OF THE APPLICATION (Int. Cl. 6) |
|---|---|---|---|
| X | EP - A - 0 608 056 (CANON) * Abstract * | 1 | G 09 G 3/36 |
| X | EP - A - 0 433 540 (CANON) * Abstract * | 1 | |
| X | EP - A - 0 361 471 (CANON) * Abstract * | 1 | |
| | | | TECHNICAL FIELDS SEARCHED (Int. Cl. 6) |
| | | | G 09 G 3/00 |

The present search report has been drawn up for all claims

| Place of search | Date of completion of the search | Examiner |
|---|---|---|
| VIENNA | 30-04-1996 | KUNZE |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

& : member of the same patent family, corresponding
　document